# EUROPEAN PATENT APPLICATION

(11) **EP 2 554 376 A1**
(43) Date of publication of application: **06.02.2013**
(21) Application number: 11762528.5
(22) Date of filing: 10.03.2011
(51) Int. Cl.: B32B 27/32, B32B 25/08, B32B 27/00, B65D 65/42

(54) **SURFACE PROTECTION FILM**

(30) Priority: 31.03.2010 JP 2010080448
(71) Applicant: Toray Advanced Film Co., Ltd., Chuo-ku Tokyo 103-0021 (JP)
(72) Inventor: NAGAE, Yoshikazu, Takatsuki-shi Osaka 569-0807 (JP); SATOU, Junya, Takatsuki-shi Osaka 569-0807 (JP); TOKUMARU, Miyuki, Nakatsugawa-shi Gifu 509-9132 (JP); Imai, Shiro, Takatsuki-shi Osaka 569-0807 (JP)
(74) Representative: Kador & Partner
(86) International application number: PCT/JP2011/055626
(87) International publication number: WO 2011/122288

(57) **Abstract**

The present invention is intended to provide a surface protection film that has moderate adhesive properties for adherend bodies with a rough surface, has a rear surface with good slipping properties, and also has blocking resistance and good unwinding properties (decreased unwinding tension to enable easy, high-speed sticking of the film to an adherend without causing creases or flaws). The surface protection film according to the present invention has a three-layered composite structure including an adhesive layer, an interlayer, and a back layer, wherein the adhesive layer is formed of 35 to 90 wt% of a linear low density polyethylene, 5 to 50 wt% of a styrene-based elastomer, and 15 wt% or less of a tackifier, the interlayer formed mainly of a propylene-based resin, and the back layer formed mainly of the same propylene-based resin as that constituting the interlayer and/or a different propylene-based resin therefrom, and also wherein the back layer has a surface roughness of 3 µm or more in terms of ten-point average roughness (Rz).

## Description

### Technical field

The invention relates to a surface protection film to be used to prevent adherend surfaces from suffering from dirt and flaws. More specifically, the invention relates to a surface protection film that has moderate adhesive properties for adherend bodies with a relatively rough surface, such as prism sheets and diffusion plates/films used particularly in the optical field and also has blocking resistance and high handleability such as smooth unwinding, as well as rear surfaces with good slipping properties.

### Background art

Surface protection films have been used to prevent synthetic resin plates, metal plates, coated steel plates, various faceplates, and the like from suffering from dirt and flaws during their processing and conveyance.

In particular, thin display panels such as liquid crystal displays have been in preferred use as display components in personal computers and TVs in recent years, and these thin display panels incorporate many optical films and optical resin plates formed of synthetic resin. Defects such as optical distortion have to be minimized in these optical films and optical resin plates and accordingly, surface protection films are widely used to prevent their surfaces from dirt and flaws during processing and conveyance.

These surface protection films generally consist mainly of a base layer of thermoplastic resin and an adhesive layer adhered over a surface of the former to form a laminated structure. When they are used, the adhesive layer serves for the film to be adhered to the adherend surface, while it is peeled and removed when become unnecessary, and accordingly, it should have a moderate adhesiveness to stick to an adherend surface, should be easily peeled off for removal, and should not contaminate the adherend surface.

These surface protection films are generally wound up into rolls, but in the wound film, the base layer and the adhesive layer are pressed against each other by a relatively large adhesion strength, leading to problems such as easy blocking of the film wound on itself and difficulty in smooth winding-off of the surface protection film when using it. In particular, such problems conventionally can have serious influence when these films are used as diffusion films and the like that require good adhesive properties as they are applied to adherends with a rough surface having a surface roughness of 0.2 µm or more in arithmetic average roughness (Ra) and 3.0 µm or more in ten-point average roughness (Rz).

To solve these problems, releasing treatment is generally performed for the layer opposite to the adhesive layer (the opposite layer is hereinafter referred to as back layer) with the aim of decreasing the force required to wind off the surface protection film (hereinafter referred to as unwinding force). For such releasing treatment, the technique of applying a releasing agent over the back layer used to be performed conventionally, but it was difficult to maintain a releasing agent adhered firmly to a back layer while allowing it to be removed smoothly from the adhesive layer. Conventional solutions to this problem include base coating with a special releasing agent and corona treatment carried out before applying a releasing agent over the back layer. Such releasing treatment, however, has problems such as necessity of troublesome coating steps, decrease in yield, and increase in required cost.

On the other hand, there is a proposal of a work-environment-friendly technique in which a base layer and an adhesive layer are formed simultaneously by co-extrusion into a laminated structure in order to eliminating the use of a solvent in producing an adhesive layer while maintaining good contact between the base layer and the adhesive layer (Patent document 1).

However, although some releasing treatment for the back surface of the base layer is necessary even in this co-extrusion method, it is impossible to perform releasing treatment in advance, and accordingly, there are restrictions on the timing of the treatment. To solve this problem, there is a proposal of a technique in which the back surface of the base layer of the layered product resulting from co-extrusion is subjected to friction treatment using a roll or cloth (Patent document 2). However, such friction treatment tends to vary in effect depending on the composition of the base layer and fail in reducing the unwinding force appropriately or lead to damage to the base material surface caused by friction, possibly resulting in foreign objects being caught on the film to cause film defects.

To solve this problem, there is a proposal of a technique in which a resin layer (back layer) produced by adding or blending silicone-based fine particles to an olefin-based resin is combined directly or indirectly with an adhesive layer into a laminated structure (Patent document 3). With this technique, however, the adhesiveness of the adhesive layer works to allow part of the silicone-based fine particles to be caught on the adhesive layer, leading to problems such as contamination of the adherend and a decrease in adhesive strength.

In this regard, there have been many proposals including the above mentioned patent document concerning the method of forming a base layer and an adhesive layer simultaneously by co-extrusion into a laminated structure. In particular, there are proposals of laminated films produced by random copolymerization of styrene and a diene based hydrocarbon to form an adhesive layer that has moderate adhesiveness for sticking to an adherend surface, can be peeled off easily when it is removed, and furthermore, does not contaminate the adherend surface (Patent documents 4 and 5). It is still impossible, however, to avoid the above mentioned problem of unwinding difficulty caused by blocking that takes place during winding off of the film, which still remains unsolved as in the above mentioned cases.

To solve these conventional technical problems, the present applicants have proposed to use an adhesive layer and a back layer both having a rough surface (Patent document 6), but this technique fails in achieving adequate effects in some cases where a still larger adhesion strength is necessary.

The use of a back layer formed of a fluorine-based resin or silicone-based resin combined with a polyolefin has also been proposed (Patent document 7), but not only it is impossible to achieve an adequate effect by simply using a fluorine-based resin, but also the adhesive layer and the back layer may suffer blocking in some cases where, for example, the film is stored at high temperatures.

### Prior art documents

### Patent documents

Patent document 1: Japanese Unexamined Patent Publication (Kokai) No. SHO 61-103975
Patent document 2: Japanese Unexamined Patent Publication (Kokai) No. HEI 2-252777
Patent document 3: Japanese Unexamined Patent Publication (Kokai) No. 2000-345125
Patent document 4: Japanese Unexamined Patent Publication (Kokai) No. HEI 7-241960
Patent document 5: Japanese Unexamined Patent Publication (Kokai) No. HEI 10-176145
Patent document 6: Japanese Unexamined Patent Publication (Kokai) No. 2007-253435
Patent document 7: Japanese Unexamined Patent Publication (Kokai) No. 2008-81589

### Summary of the invention

### Problems to be solved by the invention

The present invention is intended to provide a surface protection film that solves the above problems, has moderate adhesive properties for adherend bodies with a rough surface, has a rear surface with good slipping properties, and also has blocking resistance and good unwinding properties (decreased unwinding force to enable easy, high-speed sticking of the film to an adherend without causing creases or flaws).

### Means of solving the problems

The present invention adopts the following means to solve these problems. Specifically, the surface protection film according to the present invention has a three-layered composite structure including an adhesive layer, an interlayer, and a back layer, wherein the adhesive layer is formed of 35 to 90 wt% of a linear low density polyethylene, 5 to 50 wt% of a styrene-based elastomer, and 0 to 15 wt% of a tackifier, the interlayer formed mainly of a propylene-based resin, and the back layer formed mainly of the same propylene-based resin as that constituting the interlayer and/or a different propylene-based resin therefrom, and also wherein the back layer has a surface roughness of 3 µm or more in terms of ten-point average roughness (Rz).

Furthermore, the back layer is characterized in containing 0.5 wt% to 10 wt% of a fluorine-containing compound having a polyfluorohydrocarbon group and a polyoxyethylene group.

In addition, the back layer is characterized in including at least 0.1 to 10 wt% of inorganic particles with an average particle diameter of 1 to 20 µm, and a propylene based resin containing a fluorine-containing compound having a polyfluorohydrocarbon group and a polyoxyethylene group.

Furthermore, more preferably, the interlayer includes a propylene based resin, the aforementioned tacky layer constituent resin, and the aforementioned back layer constituent resin.

### Effect of the invention

The present invention is intended to provide, with a high reproducibility, a surface protection film that solves the above problems, has moderate adhesive properties for adherend bodies with a relatively rough surface, such as diffusion films used in liquid crystal displays in particular, has a rear surface with good slipping properties, blocking resistance and good unwinding properties (decreased unwinding tensile force to enable easy, high-speed sticking of the film to an adherend without causing creases or flaws), and suffers from no defects such as lifting and peeling from an adherend during high-temperature processing and storage after sticking to an adherend.

### Description of embodiments

The present invention will be described more in detail below.

For the present invention, intensive studies have been performed on the above mentioned objective of providing a surface protection film that has moderate adhesive properties for adherend bodies with a relatively rough surface (in particular, with a surface roughness of 0.2 µm or more in terms of arithmetic average roughness (Ra) and 3.0 µm or more in terms of ten-point average roughness (Rz)), has a rear surface with good slipping properties, and also has blocking resistance and good unwinding properties (decreased unwinding force to enable easy, high-speed sticking of the film to an adherend without causing creases or flaws), and found that the above problem is solved completely by a three-layered composite structure formed of an adhesive layer of a specific resin composition, an interlayer of a specific resin composition, and a back layer of a specific resin composition wherein the back layer preferably contains a specific fluorine-containing compound and has a rough surface.

First, the adhesive layer according to the present invention meets the requirements described below.

Examples of the linear low density polyethylene which is the major component of the adhesive layer according to the present invention include low density polyethylene produced by copolymerizing ethylene with a comonomer such as butene-1, hexene-1, 4-methyl pentene-1, and octene-1, and in particular, hexene-copolymerized polyethylene is preferable.

Such linear low density polyethylenes preferably have a MFR in the range of 3 to 30 g/10min at 190°C. Their MFR is more preferably in the range of 5 to 20 g/10min, and their MFR is still more preferably 10 to 20 g/10min. Linear low density polyethylenes with a MFR in the range of 10 to 20 g/10min and those with a MFR larger than that of the styrene-based elastomer described later are particularly preferable because they do not suffer significant defects such as thickness unevenness and streaks when they are mixed and melt-extruded together with a styrene-based elastomer component.

Here, usable linear low density polyethylenes have a density of 0.87 to 0.935 g/cm³. In particular, those with a density in the range of 0.91 to 0.93 g/cm³ are more preferably because their adhesion can be controlled easily to ensure optimum adhesive properties to meet the surface roughness of different adherends.

The adhesive layer according to the present invention mainly include 35 to 90 wt% of the aforementioned linear low density polyethylene and 5 to 50 wt% of a styrene-based elastomer as primary components. Here, it is preferable that the styrene-based elastomer is one or more styrene-based elastomers selected from the group consisting of a block copolymer of a styrene-based polymer block and an olefin-based polymer block; a block copolymer of a styrene-based polymer block and a random copolymer block of a styrene-based monomer and an olefin-based monomer; a random copolymer of styrene and an olefin; and a hydrogenated product thereof. If the styrene-based elastomer to be used has an olefin-derived unsaturated double bond, this unsaturated double bond is preferably hydrogenated as required to increase the heat resistance.

In particular, it is preferable to use a block copolymer of a styrene-based polymer block and a random copolymer block of a styrene-based monomer and an olefin-based monomer, or a random copolymer of styrene and an olefin, and it is also preferable that the styrene content is 5 to 30 wt% while the butadiene content is 95 to 70 wt%.

A styrene-based elastomer to be used preferably has a weight average molecular weight of about 100,000 to 600,000, more preferably about 200,000 to 500,000.

If the styrene content is larger, it will be impossible to achieve a required adhesiveness to an adherend, whereas if it is smaller, the adhesive layer will lack required cohesion and leave residues after being peeled off, possibly resulting in contamination of the adherend. Accordingly, it is preferably in the range of 5 to 30 wt%, more preferably in the range of 8 to 20 wt%.

On the contrary, if the butadiene content is larger than above, the adhesive layer will lack required cohesion and leave residues after being peeled off, possibly resulting in contamination of the adherend, whereas if it is smaller, it will be impossible to achieve a required adhesiveness to an adherend. Accordingly, it is preferably in the range of 95 to 70 wt%, more preferably in the range of 92 to 80 wt%.

The styrene-based elastomer preferably has a MFR in the range of 1 to 20 g/10min at 230°C, and more preferably has a MFR in the range of 3 to 15 g/10min to prevent uneven thickness and streaks from being caused as it is mixed and melt-extruded with the aforementioned linear low density polyethylene.

The tackifier, a constitute component of the adhesive layer according to the present invention, is not necessarily an essential component, but may be added to the linear low density polyethylene and the styrene-based elastomer component to a content of 0 to 15 wt% with the aim of achieving optimum adhesive properties. An example of the tackifier is polyterpene with a glass transition temperature of 30 to 100°C and a softening temperature of 30 to 150°C. The structural units of polyterpene include α-pinene, β-pinene, and dipentene, and hydrogenated products (hydrogenated terpene resin) may also be used. Usable modified products include terpene styrene resin and terpene phenol resin. Usable rosins include rosin, polymerized rosin, hydrogenated rosin, and modified rosin, and usable derivatives include glycerin esters and pentaerythritol esters of rosin or hydrogenated rosin. In particular, terpene phenol resin is preferable from the viewpoint of uniform mixing with a styrene-based elastomer.

Note that the tackifier accounts for 0 to 15 wt% of the adhesive layer, but the content may be adjusted appropriately in the case, for example, of an adherend with a rough surface where the film can suffer from lifting over time after being bonded to the adherend. The tackifier preferably accounts for 1 to 8 wt%. If its content is more than 15 wt%, on the other hand, it may contaminate the adherend or undergo an unfavorable increase in adhesion (rise in adhesion) after being combined with an adherend and then stored at a high temperature of 50°C or more.

An adhesive layer including such three components will have an appropriate degree of stickiness to diffusion films for liquid crystal displays or other optical films with a relatively rough surface. As a common index to represent adhesion, such a layer can have an initial adhesion strength of 0.05 N/25mm or more to a #320 hair-line-finished SUS304 plate (having a surface roughness equivalent to an arithmetic average roughness (Ra) of 0.3 µm and a ten-point average roughness (Rz) of 3.6 µm).

Note that the contents of a linear low density polyethylene, styrene-based elastomer, and tackifier in the adhesive layer according to the present invention may be appropriately set up depending on the adherend used, particularly the degree of surface roughness of various diffusion films, and optimum values are preferably identified in the above-mentioned ranges to ensure required sticking adhesive properties.

In the next place, the interlayer for the present invention is formed mainly of a propylene-based resin, and examples of the propylene-based resin include homopolypropylene, propylene-ethylene copolymer (random copolymer and/or block copolymer), and propylene-α-olefin copolymer, which may be used singly or as a mixture of two or more thereof.

Here, there are no specific limitations on the type of α-olefin as long as it can be copolymerized with propylene, and examples include, for instance, butene-1, hexene-1, 4-methyl pentene-1, octene-1, pentene-1, and heptene-1. In particular, homopolypropylene resin is more preferable because a high rigidity can be achieved.

For the surface protection film according to the present invention, an interlayer may be produced by adding to or mixed in the aforementioned propylene resin, the aforementioned resin used to form the adhesive layer and/or the undermentioned resin used to form the back layer resin. In this case, it is preferable that the total content of the constituent resins that are added or mixed in is less than 40 wt%. In general, when a film is produced by co-melt-extrusion, edge portions with ununiform thickness are cut off and removed in, for instance, a slitting step, but use of these portions as material for the interlayer is a preferable practice because the feedstock consumption can be reduced.

Here, a filler, lubricant, antioxidant, ultraviolet absorber, pigment, antistatic agent, and nucleating agent, namely, talc, stearate amide, calcium stearate, and the like, may be added appropriately to the interlayer as long as they do not decline its physical properties. These may be added singly, or two or more may be used in combination.

In the next place, the back layer according to the present invention meets the requirements described below.

The back layer according to the present invention is formed mainly of a propylene-based resin, but it is preferably formed mainly of a propylene-based resin containing 0.5 wt% to 10 wt% of a fluorine-containing compound that includes both a polyfluorohydrocarbon group and a polyoxy ethylene group because the unwinding force can be controlled at a low level.

The propylene-based resin may be either identical to or different from the propylene-based resin used to constitute the interlayer, but preferably contains at least 20 wt% or more of a copolymer of propylene and ethylene and/or an α-olefin from the viewpoint of allowing the undermentioned back layer to have a rough surface with a surface roughness Rz of 3.0 µm or more. If the propylene-based copolymer to be used is a copolymer with ethylene and/or an α-olefin, an increase in the comonomer content serves to lower the melting point of the copolymer to permit easy co-extrusion and low-temperature extrusion, and accordingly, the comonomer content is more preferably in the range of 3 to 7 wt%. Here, if a heat-resistant back layer is required, the comonomer content may be decreased to ensure a desired degree of heat resistance.

The propylene-based resin, furthermore, preferably has a MFR of 3 to 40 g/10min at 230°C. In particular, a propylene-based resin with a MFR in the range of 10 to 40 g/10min is more preferable because such a resin can be extruded at a low temperature and serves, in combination with a low density polyethylene, to produce a back layer with a rough surface easily.

To allow the back layer to have a rough surface, it is preferable that at least 4 wt% of a high-pressure-processed low density polyethylene with low compatibility contained.

Furthermore, it is preferable that the back layer is formed of a propylene-based resin containing 0.5 wt% to 10 wt% of a fluorine compound that includes both a polyfluorohydrocarbon group and a polyoxyethylene group, and such a fluorine compound including a polyfluorohydrocarbon group and a polyoxyethylene group may be based on, as monomer (a), for example, a (meth)acrylate having a perfluoroalkyl group with carbon number of 1 to 18, and can be produced by copolymerizing it with, for example, a (meth)acrylate containing a polyoxyethylene group used as monomer (b) or (c) as described later.

A perfluoroalkyl group to be used as aforementioned monomer (a) preferably has a carbon number of 1 to 18, more preferably 1 to 6. Such a perfluoroalkyl group may be in either a straight-chain or a branched form. Such groups may be used singly or as a combination of two or more of them.

Such a (meth)acrylate containing a perfluoroalkyl group is commercially available from Kyoeisha Chemical Co., Ltd., but can be synthesized by a known method from a commercially available fluorine-containing compound used as feedstock.

Such a monomer (b) containing a polyoxyethylene group preferably has a structure having 1 to 30, more preferably 1 to 20, oxyethylene units (-CH₂-CH₂-O-) connected directly to each other. Here, the chain may contain oxypropylene units (-CH₂-CH(CH₃)-O-). Preferable examples include polyethylene glycol monomethacrylate with eight oxyethylene units. Such examples of monomer (b) may be used singly, or two or more may be used in combination.

Another monomer containing a polyoxyethylene group, which is referred to as monomer (c), may be a di(meth)acrylate of a structure having 1 to 30 oxyethylene units directly connected with each other and having a double bond at both terminals, and a preferable example is a polyethylene glycol dimethacrylate having eight such units. Such monomers (c) may also be used singly, or two or more may be used in combination.

With respect to the contents of such monomers (a), (b), and (c), it is preferable that monomer (a) accounts for 1 to 80 wt%, monomer (b) accounting for 1 to 80 wt%, and monomer (c) accounting for 1 to 50 wt%.

Note that the above-mentioned fluorine-containing compounds having a polyfluorohydrocarbon group and a polyoxyethylene group may be copolymerized, in addition to the above-mentioned three monomers, with another monomer copolymerizable with them to a content of less than 50 wt%. Examples of such a monomer include methylene, vinyl acetate, vinyl chloride, vinyl fluoride, halogenated vinyl, styrene, methyl styrene, (meth)acrylic acid/esters thereof, (meth)acrylamide monomers, and (meth)allyl monomers.

Polymerization methods that can be used to produce the aforementioned fluorine-containing compound having a polyfluorohydrocarbon group and a polyoxyethylene group from the aforementioned monomers include bulk polymerization, solution polymerization, suspension polymerization, and emulsion polymerization, and in addition to thermal polymerization, other methods such as photopolymerization and energy ray polymerization may be adopted.

Usable polymerization initiators include conventional organic azo compounds, peroxides, and persulfates.

A fluorine-containing compound to be used for the present invention preferably has a molecular weight of 1,000 to 100,000, more preferably 5,000 to 20,000. The molecular weight may be adjusted by adding a polymerization chain transfer agent such as thiol, mercaptan, and α-methyl styrene.

Here, it is preferable that the fluorine-containing compound accounts for 0.5 wt% to 10 wt% of the back layer according to the present invention. Blocking with the adhesive layer tends to occur, sometimes making it difficult to ensure a desired unwinding force, if its content is less than 0.5 wt%. If its content is increased to 10 wt% or more, it will not mix with the resin uniformly because of low solubility in the resin, and in addition, the fluorine-containing compound can have influence during melt-extrusion on the propylene-based resin used to form a back layer, possibly leading to slippage on extruder screws and difficulty in uniform discharge.

Here, it is preferable that in addition to the fluorine-containing compound, the back layer according to the present invention simultaneously contain 0.1 wt% to 10 wt% of inorganic particles with an average particle diameter of 1 to 20 µm. It is particularly preferable that such inorganic particles have a relatively large average particle diameter of 3 to 15 µm from the viewpoint of slipping properties and blocking prevention.

Materials of such inorganic particles include calcium carbonate, magnesium carbonate, titanium oxide, clay, talc, magnesium hydroxide, aluminum hydroxide, and zeolite, as well as silica, of which silica is more preferable.

The synergy effect of the fluorine-containing compound, inorganic particles, and the surface roughness of a back layer as described later works to suppress blocking and easily achieve a desired unwinding force of 0.5 N/25mm or less.

The back layer according to the present invention preferably has a surface roughness of 3 µm or more in terms of ten-point average roughness (Rz). If Rz is less than 3 µm, the resulting protection film will suffer from creases when wound up into a roll during its production process, resulting in quality degradation. Such surface roughness can be created by, for example, adding a small amount of a low-compatibility ethylene-based resin as described below to the propylene-based resin used as main component.

The three-layered laminated structure referred to for the present invention is as described below.
The surface protection film according to the present invention has a composite structure in the form of a three-layered laminated film having an adhesive layer and a back layer with an interlayer formed mainly of a propylene-based resin sandwiched between them.

Described below is the production method for the surface protection film according to the present invention.

There are no specific limitations on the production method to be used for the surface protection film according to the present invention, and preferable processes include: melt-extruding separately from different extruders, a mixed resin composition to constitute a back layer resin, including 60 to 95.4 wt% of a propylene-based resin, 0.5 wt% to 10 wt% of a fluorine-containing compound having both a polyfluorohydrocarbon group and a polyoxyethylene group, 0.1 wt% to 10 wt% of silica with a particle diameter of 1 to 20 µm, and 4 wt% to 20 wt% of a low density polyethylene with a relatively high viscosity, a mixed resin composition to constitute an adhesive layer resin, including, for example, 35 to 95 wt% of a linear low density polyethylene, 5 to 50 wt% of a hydrogenated styrene butadiene random copolymer, and 0 to 15 wt% of a tackifier, and, a resin composition to constitute an interlayer resin, including propylene-based resin as mainly component, which are combined into an integrated layered structure in the die through a so-called three-layer co-extrusion step to produce a molded laminate product containing a back layer, an interlayer, and an adhesive layer, followed by winding it up into a roll of a surface protection film; and melt-extruding separately a back layer, an interlayer, an adhesive layer as mentioned above and then combining the adhesive layer with the back layer and/or the interlayer by the lamination method to form an integrated layered structure. Generally known methods such as blow-extrusion and T-die extrusion may be used for the former, while dry lamination, T-die melt-extrusion, or T-die extrusion coating may be used for the latter, and in particular, T-die hot-melt-co-extrusion is preferable from the viewpoint of achieving high thickness accuracy, surface profile control, high quality, and low cost.

Depending on the adherend's thickness and the adherend's required quality level, the surface protection film according to the present invention normally has a thickness in the range of 20 to 100 µm from the viewpoint of moldability and handleability.

Here, the adhesive layer, interlayer, and back layer may each have an appropriately selected thickness based on the required levels as described above, but the three-layered laminated film for the present invention normally has a back layer thickness of 2 to 10 µm, an interlayer thickness of 14 to 80 µm, and an adhesive layer thickness of about 4 to 10 µm.

### Examples

The present invention will now be illustrated with reference to Examples, but it should be understood that the invention is not construed as being limited thereto. Note that for Examples and Comparative examples, "parts" and "percent (%)" are in terms of mass unless otherwise specified. The methods used for measurement and evaluation for various physical properties are as described below.

### (1) Sticking of specimen

Each specimen for Examples and Comparative examples was stored and adjusted for 24 hours under the conditions of a temperature of 23°C and a relative humidity of 50%, and sticked to an adherend, which is either a #320 hair-line-finished SUS304 plate with a thickness of 2 mm (with an arithmetic average roughness (Ra) of 0.3 µm and a ten-point average roughness (Rz) of 3.6 µm), supplied by Watanabe Giichi Seisakusho Co., Ltd., or a diffusion film, used as an adherend, selected from a wide surface roughness range, using a roll press (special pressure-sticking roller, supplied by Yasuda Seiki Seisakusho Ltd.) at a sticking speed of 300 cm/min under a sticking pressure of 9,100 N/m. Subsequently, the specimen was stored for 24 hours under the conditions of a temperature of 23°C and a relative humidity of 50% and then subjected to various measurements and evaluations.

### (2) Adhesion strength

A tensile tester (Tensilon universal tester, supplied by Orientec Co., Ltd.) was used to measure the adhesion strength under the conditions of a tension speed of 300 mm/min and a peeling angle of 180°.

### (3) Contact strength

A specimen was stored for a predetermined time at a temperature of 23°C or 50°C, and then sticked to a SUS304 plate or one of various diffusion films selected as adherend, and the conditions of its contact with the specimen was visually observed for evaluation as follows.

A: Perfect contact
B: Poor contact in only a few portions, and lifting found in a few portions of the specimen film (area ratio 30% or less)
C: Lifting of the film found in a 70% or more area.

### (4) Unwinding force

A film, wound up in a roll, was stored for 24 hours at 23°C and a relative humidity of 50%RH, and then the tenth and eleventh layers from the surface of the roll were taken, followed by sampling two-layered specimens at three positions aligned in the width direction. Each specimen has a width of 25 mm and a length of 100 mm or more.
At each end of a specimen, the two layers were peeled slightly (but enough for holding by a chuck) by hand, and the specimen was fixed in a tensile tester (Tensilon universal tester, supplied by Orientec Co., Ltd.) with each end held by a chuck. As the layers were peeled at a rate of 200 mm/min, the peeling force was measured at three positions aligned in the width direction, followed by calculating their average to represent the unwinding force.

### (5) Surface roughness

For the surface roughness of a back layer, a high accuracy fine geometry measurement device (Surfcorder ET4000A, supplied by Kosaka Laboratory Ltd.) was used according to JIS B0601-1994 to make 21 measurements on 2 mm length in the transverse direction and at 10 µm intervals in the length direction (machine direction), followed by carrying out three-dimensional analysis to determine the arithmetic average roughness (Ra) and ten-point average roughness (Rz) (in µm). Here, the measuring conditions included use of a diamond needle with a stylus tip radius of 2.0 µm, a measuring force of 100 µN, and a cut-off of 0.8 mm.

### (6) Staining properties

After storage for a predetermined period at a temperature 23°C or 50°C, the stain on the SUS304 plate used as adherend or on one of various diffusion films used as adherend was visually observed and evaluated as follows.

A: No stain found
B: Stain found in a few portions
C: Significant stain found

### (Example 1)

The constituent resins for each layer were prepared as follows.

Resin for adhesive layer: A resin composition consisting of 70 wt% of a linear low density polyethylene (hexene-copolymerized polyethylene) with a density of 0.91 g/ m³ and a MFR of 15 g/10min at 190°C, 25 wt% of a styrene-butadiene random copolymer containing 10 wt% of a styrene component and having a MFR of 10g/10min at 230°C, and 5 wt% of a pelletized master batch with 40 wt% hydrogenated terpene phenol, which acted as tackifier, was mixed uniformly in a Henschel mixer.

Here, the pelletized master batch with 40 wt% hydrogenated terpene phenol was prepared from 40 wt% of the terpene phenol and 60 wt% of the linear low density polyethylene, which were processed by a twin screw extruder to provide a pelletized master batch.

Resin for back layer: 45 wt% of homopolypropylene having a MFR of 5 g/10min at 230°C, 24 wt% of a propylene-ethylene random copolymer (ethylene content 5 wt%) having a MFR of 35 g/10min at 230°C , and 6 wt% of a low density polyethylene having a MFR of 2 g/10min at 190°C and a density of 0.92 g/cm³ were combined with 25 wt% of a master batch, which was a mixture composition of 90 wt% of the aforementioned homopolypropylene, 4 wt% of silica with an average particle diameter of 11µ, and 6 wt% of a fluorine-containing compound having a polyfluorohydrocarbon group and a polyoxyethylene group, and mixed uniformly in a Henschel mixer.

Here, the fluorine-containing compound having a polyfluorohydrocarbon group and a polyoxyethylene group was produced from 25 wt% of a perfluoroalkyl acrylate of C₆F₁₃ (CH₂=CHCOOC₂H₄C₆F₁₃), which was used as monomer (a), 50 wt% of a polyethylene glycol monoacrylate with eight oxyethylene repeating units {CH₂=CHCOO(CH₂CH₂O)₈H}, which was used as monomer (b), and 25 wt% of a polyethylene glycol dimethacrylate with eight oxyethylene repeating units {CH₂=C(CH₃)COO(CH₂CH₂O)₈COC(CH₃)=CH₂}, which was used as monomer (c). Using trifluorotoluene as solvent, 2,2'-azo-bis(2,4-dimethylvaleronitrile) as polymerization initiator, and lauryl mercaptan as chain transfer agent, they were subjected to polymerization in a nitrogen gas flow at 60°C for 5 hours while stirring, followed by precipitation in methanol, filtration, and drying under reduced pressure.

Resin for interlayer: The same homopolypropylene as used for the back layer was used.

Then, the resins for each layer prepared above were used and also a T-die composite film production machine with a die lip width of 2,400 mm having three extruders each with a diameter of 90 mm (for adhesive layer), a diameter of 65 mm (for back layer), and a diameter of 115 mm (for interlayer) was used. The resin compositions prepared above were fed to respective extruders while the discharge rate of each extruder was adjusted so that the adhesive layer thickness ratio, the back layer thickness ratio, and the interlayer thickness ratio would be 15%, 8%, and 77%, respectively. They were extruded through the composite T-die at an extrusion temperature of 200°C to produce a three-layered laminate film with a film thickness of 40 µm, which was wound up in a roll.

Then, the film wound up in a roll was fed to a slitting machine to provide a film sample wound up in a roll with a width of 1,600 mm and a length of 2,000 m.

When producing this film of Example 1, the film was sent (wound off) smoothly and easily to the slitting machine for slitting to a predetermined width, and no blocking was found. Blocking would cause a significant scrunching sound when the adhesive layer is peeled off from the back layer, but there was no such sound, demonstrating that the film was wound off very smoothly.

For evaluation of the characteristics the resulting film of Example 1, it was stored for 24 hours at 23°C and a relative humidity of 50%RH and then wound back to cut out specimens. Here again, no blocking was found, and the film was wound back smoothly, thus properly providing cut-out specimens.

Subsequently, these specimens were subjected to evaluation of various characteristics, and results are shown in Table 1 along with the resin compositions used to produce each layer.

The adherends used were a #320 hair-line-finished SUS304 plate with a thickness of 2 mm (with an arithmetic average roughness (Ra) of 0.3 µm and a ten-point average roughness (Rz) of 3.6 µm) and a polycarbonate diffusion film A with a surface roughness (Ra) of 0.6 µm and (Rz) of 6.9 µm.

The roll was stored and wound back to the core, and it was found that the film was free of blocking and could be wound back smoothly.

### (Example 2)

To prepare a resin for the adhesive layer, a resin composition consisting of 60 wt% of a linear low density polyethylene (hexene-copolymerized polyethylene) with a density of 0.91g/ m³ and a MFR of 15 g/10min at 190°C, and 40 wt% of a styrene-butadiene random copolymer containing 10 wt% of a styrene component and having a MFR of 10 g/10min at 230°C was mixed uniformly in a Henschel mixer.

The resin for the back layer consisted of 50 wt% of homopolypropylene with a MFR of 5 g/10min at 230°C, 40 wt% of a propylene-ethylene random copolymer (ethylene content 5 wt%) with a MFR of 35 g/10min at 230°C, and 10 wt% of a low density polyethylene with a MFR of 2 g/10min at 190°C and a density of 0.92 g/cm³, and the interlayer was the same as in Example 1. They were co-extruded into a laminated film of 40 µm, which was then wound up in a roll.

The film was slit to a predetermined width by a slitting machine and then wound up to produce a product roll. It was found that the specimen film could be prepared smoothly. Characteristics of the resulting film are shown in Table 1.

### (Comparative example 1)

Except that the back layer consisted of 98 wt% of a homopolypropylene having a MFR of 5 g/10min at 230°C, i.e., the same as in Example 2, and 2 wt% of a low density polyethylene having a MFR of 2 g/10min at 190°C and a density of 0.92 g/cm³, the same procedure as in Example 2 was carried out for co-extrusion to produce the same laminated film of 40 µm as in Example 2, which was wound up in a roll.

Subsequently, when it was attempted to wind off the wound-up film aiming to feed it to the slitting machine, adhesion and blocking were found to take place between the adhesive layer and the back layer in this film for Comparative example 1. When it was wound off strongly, there was a serious scrunching sound as the layers were peeled off from each other, suggesting that the film was difficult to wind off. Characteristics of the resulting film are shown in Table 2.

### (Example 3)

Except that the resin for the adhesive layer of Example 3 consisted of 75 wt% of the same linear low density polyethylene (hexene copolymerization polyethylene) as used for Example 1, 10 wt% of the same (as used for Example 1) styrene-butadiene random copolymer, and 15 wt% of a pelletized master batch with 40 wt% of the same hydrogenated terpene phenol, the same procedure as in Example 1 was carried out for co-extrusion to produce a laminated film of 40 µm, which was wound up in a roll.

Subsequently, the film was slit to a predetermined width by a slitting machine and then wound up to produce a product roll. It was found that the specimen film could be prepared smoothly. Characteristics of the resulting film are shown in Table 1.

### (Examples 4 and 5)

The adhesive layer resin used for Example 4 was produced from a resin composition consisting of 45 wt% of the same linear low density polyethylene (hexene copolymerization polyethylene) as used for Example 1, 40 wt% of a styrene-ethylene butadiene-styrene triblock copolymer (hydrogenated polymer) containing 15 wt% of a styrene component and having a MFR of 3.5 g/10min at 230°C, and 15 wt% of the same pelletized master batch with 40 wt% of hydrogenated terpene phenol as used for Example 1, which was mixed uniformly in a Henschel mixer. Except for this, the same constituent resins as used for Example 1 were used.

For Example 5, an adhesive layer resin was produced from a resin composition consisting of 40 wt% of the same linear low density polyethylene (hexene copolymerization polyethylene) as used for Example 1, 50 wt% of a styrene-butadiene random copolymer (styrene component 10 wt%) having a MFR of 10 g/10min at 230°C, and 10 wt% of the same pelletized master batch with 40 wt% of hydrogenated terpene phenol as used for Example 1, which was mixed uniformly in a Henschel mixer. Except for this, the same constituent resins as used for Example 1 were used.

Except for using the aforementioned constituent resins for an adhesive layer, the same procedure as for Example 1 was carried out to prepare films for Examples 4 and 5.

In both Examples 4 and 5, the resulting film was slit to a predetermined width by a slitting machine and then wound up to produce a product roll, and specimen films were prepared smoothly in both cases. Characteristics of the resulting film are shown in Table 1.

Here, the adherend used for Examples 4 and 5 was polycarbonate diffusion film B with a surface roughness (Ra) of 1.8 µm and (Rz) of 15.0 µm.

### (Example 6)

A resin for the adhesive layer was produced from a resin composition consisting of 40 wt% of the same linear low density polyethylene (hexene copolymerization polyethylene) as used for Example 1, 50 wt% of a styrene-butadiene random copolymer (styrene component 10 wt%) with a MFR of 10 g/10min at 230°C, and 10 wt% of a pelletized master batch with 40 wt% of hydrogenated terpene phenol, i.e., the same as used for Example 1, while an interlayer resin was produced from 60 wt% of a propylene-ethylene random copolymer (ethylene content 4 wt%) having a MFR of 6 g/10min at 230°C and 40 wt% of recover pellets, i.e., edges of film cut off in the slitting step in Example 1. For the back layer resin, a master batch was prepared in advance in the form of a mixture composition consisting of 66 wt% of a propylene-ethylene random copolymer (ethylene content 5 wt%) with a MFR of 35 g/10min at 230°C, 18 wt% of low density polyethylene with a MFR of 2 g/10min at 190°C and a density of 0.92 g/cm³, 4 wt% of silica with an average particle diameter 11µ, 4 wt% of talc with an average particle diameter 11 µ, and 8 wt% of a fluorine-containing compound having a polyfluorohydrocarbon group and a polyoxyethylene group which was polymerized as described below.

Here, with respect to the fluorine-containing compound, except that 10 wt% of perfluoroalkyl acrylate CH₂=CHCOOC₂H₄C₈F₁₇, which acted as monomer (a), 80 wt% of oxypolyethylene glycol monoacrylate CH₂=CHCOO(CH₂CH₂O)₈H, which acted as monomer (b), and 10 wt% of polyethylene glycol dimethacrylate CH₂=C(CH₃)COO(CH₂CH₂O)₈COC(CH₃)=CH₂, which acted as monomer (c), were used, the same polymerization procedur as in Example 1 was carried out to provide an intended fluorine-containing compound.

Then, as in the case of Example 1, the resin compositions prepared above were introduced to respective extruders to produce a film with a thickness of 40 µm (three-layered laminated film with a tacky layer thickness ratio of 15%, a back layer thickness ratio of 8%, and an interlayer thickness ratio of 77%), which was then wound up in a roll.

Subsequently, the film was slit to a predetermined width by a slitting machine and then wound up to produce a product roll. It was found that the specimen film could be prepared smoothly. Characteristics of the resulting film are shown in Table 1.

Here, as in the case of Examples 4 and 5, the adherend used was polycarbonate diffusion film B with a surface roughness (Ra) of 1.8 µm and (Rz) of 15.0 µm.

### (Comparative example 2)

An adhesive layer resin was produced from a resin composition consisting of 60 wt% of a styrene-butadiene random copolymer (styrene component 10 wt%) with a MFR of 10 g/10min at 230°C, 25 wt% of a linear low density polyethylene (hexene copolymerization polyethylene) with a density 0.922 g/ m³ and a MFR of 3 g/10min at 190°C, and 15 wt% of a tackifier in the form of a pelletized master batch prepared in advance consisting of 40 wt% of hydrogenated terpene phenol and 60 wt% of the aforementioned linear low density polyethylene, which was mixed uniformly in a Henschel mixer, while a back layer resin was produced from 98 wt% of homopolypropylene with a MFR of 5 g/10min at 230°C and 2 wt% of low density polyethylene with a MFR of 2 g/10min at 190°C and a density of 0.92 g/cm³. Except for this, the same procedure for co-extrusion as in Example 4 was carried out to provide a laminated film of 40 µm, which was then wound up in a roll.

Subsequently, it was attempted to wind off the film which had been wound up, aiming to subjecting it to a slitting machine, but the film prepared in Comparative example 2 suffered from strong contact and blocking between the adhesive layer and the back layer, making it impossible to smoothly wind off the film which was in a large-width state. For characteristics evaluation, some portions of the film were taken forcibly to produce specimens for measurement and evaluation. Characteristics of the resulting film are shown in Table 2. The film prepared in Comparative example 2 was found to suffer from slight streaks caused during film production.

### (Comparative examples 3 and 4)

For Comparative example 3, an adhesive layer resin was produced from a resin composition consisting of 92.5 wt% of a linear low density polyethylene (hexene copolymerization polyethylene), 5 wt% of a styrene-butadiene random copolymer (styrene component 10 wt%) having a MFR of 10 g/10min at 230°C, and 2.5 wt% of the same pelletized master batch with 40 wt% of hydrogenated terpene phenol as used for Example 1, which was mixed uniformly in a Henschel mixer. Except for this, the same constituent resins as used for Example 1 were used.

For Comparative example 4, an adhesive layer resin was produced from a resin composition consisting of 73 wt% of a linear low density polyethylene (hexene copolymerization polyethylene), 2 wt% of a styrene-butadiene random copolymer (styrene component 10 wt%) having a MFR of 10 g/10min at 230°C, and 25 wt% of a pelletized master batch with 40 wt% of hydrogenated terpene phenol, which was mixed uniformly in a Henschel mixer. Except for this, the same constituent resins as used for Example 1 were used.

Except for using the aforementioned constituent resins for an adhesive layer, the same procedure as for Example 1 was carried out to prepare films for Comparative examples 3 and 4.

In both Comparative examples 3 and 4, the resulting film was slit to a predetermined width by a slitting machine and then wound up to produce a product roll, and specimen films were prepared smoothly in both cases. When subjected to tackiness measurement, however, the resulting films failed in sticking to any of the adherends. Characteristics of the resulting films are shown in Table 2.

### (Comparative example 5)

An adhesive layer resin was produced from a resin composition consisting of 20 wt% of a linear low density polyethylene (hexene copolymerization polyethylene), 30 wt% of a styrene-butadiene random copolymer (styrene component 10 wt%) having a MFR of 10 g/10min at 230°C, and 50 wt% of the same pelletized master batch with 40 wt% of hydrogenated terpene phenol as used for Example 1, which was mixed uniformly in a Henschel mixer. Except for this, the same constituent resins as used for Example 1 were used.

Except for using the aforementioned constituent resins for an adhesive layer, the same procedure as for Example 1 was carried out to prepare a film for Comparative example 5.

The resulting film was slit to a predetermined width by a slitting machine and then wound up to produce a product roll. It was found that the specimen film could be prepared smoothly. However, the resulting film was evaluated to be inferior in terms of staining properties. Characteristics of the resulting film are shown in Table 2.

### (Comparative example 6)

Resin for adhesive layer: A resin composition consisting of 60 wt% of a styrene-butadiene random copolymer having a MFR of 10 g/10min at 230°C (styrene component 10 wt%), 32 wt% of a propylene-ethylene random copolymer with a MFR of 35 g/10min at 230°C (ethylene content 5 wt%), and 8 wt% of low density polyethylene with a MFR of 2 g/10min at 190°C and a density of 0.92 g/cm³ was mixed uniformly in a Henschel mixer.

Resin for back layer: A mixture composition consisting of 80 wt% of a propylene-ethylene random copolymer (ethylene content 5 wt%), with a MFR of 35 g/10min at 230°C and 20 wt% of low density polyethylene with a MFR of 2 g/10min at 190°C and a density of 0.92 g/cm³ was prepared in advance and used as master batch.

Resin for interlayer: A homopolypropylene having a MFR of 5 g/10min at 230°C was used.

Except for using the aforementioned constituent resins, the same procedure as for Example 1 was carried out to prepare a film for Comparative example 6.

The resulting film was slit to a predetermined width by a slitting machine and then wound up to produce a product roll. It was found that the specimen film could be prepared smoothly. Based on adhesion strength measurement, however, the resulting film was evaluated to be inferior in terms of contact strength. Characteristics of the resulting film are shown in Table 2.

**Table 1**

| Layer | Composition | Unit | Example 1 | Example 2 | Example 3 | Example 4 | Example 5 | Example 6 |
|---|---|---|---|---|---|---|---|---|
| Adhesive layer | linear low density polyethylene | wt% of | 73 | 60 | 84 | 54 | 46 | 46 |
| | styrene-based elastomer | wt% of | 25 | 40 | 10 | 40 | 50 | 50 |
| | tackifier | wt% of | 2 | | 6 | 6 | 4 | 4 |
| | propylene-based resin | wt% of | | | | | | |
| | ethylene-based resin | wt% of | | | | | | |
| Back layer | fluorine-containing compound | wt% of | 1.5 | | 1.5 | 1.5 | 1.5 | 8 |
| | inorganic particles | wt% of | 1 | | 1 | 1 | 1 | 8 |
| | propylene-based resin | wt% of | 91.5 | 90 | 91.5 | 91.5 | 91.5 | 66 |
| | ethylene-based resin | wt% of | 6 | 10 | 6 | 6 | 6 | 18 |

| Interlayer | propylene-based resin | | homopolypropylene | homopolypropylene | homopolypropylene | homopolypropylene | homopolypropylene | propylene-ethylene random copolymer + recover input material |
|---|---|---|---|---|---|---|---|---|
| Evaluation | surface roughness Rz | µm | 6.4 | 5.2 | 7.1 | 7.3 | 6.8 | 6.8 |
| | Ra | µm | 0.5 | 0.7 | 0.5 | 0.6 | 0.5 | 0.5 |
| | adhesion strength to SUS plate | N/25mm | 0.1 | 0.6 | 0.05 | 1.3 | 2.6 | 2.6 |
| | adhesion strength to diffusion film A | N/25mm | 0.12 | 0.26 | 0.06 | - | - | - |
| | adhesion strength to diffusion film B | N/25mm | - | - | - | 0.14 | 0.18 | 0.18 |
| | contact strength | | A | A | A | A | A | A |
| | unwinding force | N/25mm | 0.01 | 0.2 | 0.01 | 0.03 | 0.04 | 0.04 |
| | blocking resistance | | A | A | A | A | A | A |
| | staining property | | A | A | A | A | A | A |

**[Table 2]**

| Layer | Composition | Unit | Comparative example 1 | Comparative example 2 | Comparative example 3 | Comparative example 4 | Comparative example 5 | Comparative example 6 |
|---|---|---|---|---|---|---|---|---|
| Adhesive layer | linear low density polyethylene | wt% of | 60 | 34 | 94 | 88 | 50 | |
| | styrene-based elastomer | wt% of | 40 | 60 | 5 | 2 | 30 | 60 |
| | tackifier | wt% of | | 6 | 1 | 10 | 20 | |
| | propylene-based resin | wt% of | | | | | | 32 |
| | ethylene-based resin | wt% of | | | | | | 8 |
| Back layer | fluorine-containing compound | wt% of | | | 1.5 | 1.5 | 1.5 | |
| | inorganic particles | wt% of | | | 1 | 1 | 1 | |
| | propylene-based resin | wt% of | 98 | 98 | 91.5 | 91.5 | 91.5 | 80 |
| | ethylene-based resin | wt% of | 2 | 2 | 6 | 6 | 6 | 20 |

| Interlayer | propylene-based resin | | homopolypropylene | homopolypropylene | homopolypropylene | homopolypropylene | homopolypropylene | homopolypropylene |
|---|---|---|---|---|---|---|---|---|
| Evaluation | surface roughness Rz | µm | 1.3 | 1.4 | 6.5 | 6.3 | 6.8 | 7.9 |
| | Ra | µm | 0.14 | 0.18 | 0.5 | 0.5 | 0.6 | 1.1 |
| | adhesion strength to SUS plate | N/25mm | 0.4 | 4.3 | 0 | 0 | 5.8 | 0.01 |
| | adhesion strength to diffusion film A | N/25mm | 0.28 | - | 0 | 0 | 0.56 | 0 |
| | adhesion strength to diffusion film B | N/25mm | - | 0.12 | 0 | 0 | 0.31 | 0 |
| | contact strength | | A | A | C | C | A | c |
| | unwinding force | N/25mm | 1.2 | 5.1 | 0.01 | 0.01 | 0.01 | 0.01 |
| | blocking resistance | | C | C | A | A | A | A |
| | staining property | | A | A | A | A | C | A |

### [Industrial applicability]

The surface protection film according to the present invention can be used favorably as surface protection film not only for preventing contamination and flaws during processing and conveyance of synthetic resin plates, metal plates, coated steel plates, and various nameplates, but also for preventing surface contamination and flaws during processing and conveyance of various synthetic-resin-based optical film and optical-use resin plates widely used in recent years in thin-type displays such as liquid crystal displays

## Claims

1. A surface protection film comprising a three-layered composite structure including an adhesive layer, an interlayer, and a back layer, wherein the adhesive layer is formed of 35 to 90 wt% of a linear low density polyethylene, 5 to 50 wt% of a styrene-based elastomer, and 15 wt% or less of a tackifier, the interlayer formed mainly of a propylene-based resin, and the back layer formed mainly of the same propylene-based resin as that used in the interlayer and/or a different propylene-based resin therefrom, and also wherein the back layer has a surface roughness of 3 µm or more in terms of ten-point average roughness (Rz).

2. A surface protection film as defined in claim 1 wherein the back layer contains 0.5 wt% to 10 wt% of a fluorine-containing compound having a polyfluorohydrocarbon group and a polyoxyethylene group.

3. A surface protection film as defined in claim 2 wherein the back layer comprises at least 0.1 to 10 wt% of inorganic particles with an average particle diameter of 1 to 20 µm, and a propylene-based resin containing a fluorine-containing compound having a polyfluorohydrocarbon group and a polyoxyethylene group.

4. A surface protection film as defined in any of claims 1 to 3 wherein the interlayer comprises a propylene-based resin, the aforementioned resin serving to constitute an adhesive layer, and the aforementioned resin serving to constitute a back layer.
